Europäisches Patentamt

European Patent Office

Office européen des brevets

(19)

(11) Veröffentlichungsnummer: **0 212 270**
**B1**

(12) **EUROPÄISCHE PATENTSCHRIFT**

(45) Veröffentlichungstag der Patentschrift:
18.10.89

(21) Anmeldenummer: 86109829.1

(22) Anmeldetag: 17.07.86

(51) Int. Cl.⁴: **A 01 F 12/40**

(54) Verteilereinrichtung für Häcksler.

(30) Priorität: 23.08.85 DE 3530195

(43) Veröffentlichungstag der Anmeldung:
04.03.87 Patentblatt 87/10

(45) Bekanntmachung des Hinweises auf die Patenterteilung:
18.10.89 Patentblatt 89/42

(84) Benannte Vertragsstaaten:
AT BE CH FR GB IT LI NL SE

(56) Entgegenhaltungen:
DE-A- 2 815 936
FR-A- 1 487 197
FR-A- 2 407 661
US-A- 2 708 582

(73) Patentinhaber: BISO Bitter GmbH. & Co.KG.,
Ladestrasse 3 - 9, D-4986 Rödinghausen-Bruchmühlen
(DE)

(72) Erfinder: Scharf, Alois, Kohneweg 7, D-4520 Melle 8 St.
Annen (DE)

(74) Vertreter: Gossel, Hans K., Dipl.-Ing. et al,
Rechtsanwälte E. Lorenz - B. Seidler M. Seidler -
Dipl.-Ing. H.K. Gossel Dr. I. Philipps - Dr. P.B. Schäuble
Dr. S. Jackermeier - Dipl.-Ing. A. Zinnecker,
Widenmayerstrasse 23 D-8000 München 22 (DE)

ACTORUM AG

**Beschreibung**

Die Erfindung betrifft eine Verteilereinrichtung für Häcksler, vorzugsweise Anbauhäcksler für Mähdrescher, mit einem oberen Deckblech, unterhalb von dem eine rechte und eine linke Gruppe von winkelig, vorzugsweise rechtwinkelig, zu diesem stehenden Leitblechen nebeneinander angeordnet sind, die an ihren dem Häcksler zugewandten Enden um Achsen schwenkbar gelagert und im Abstand von diesen Achsen mit Führungsbolzen, die Führungsschlitze des Deckblechs oder des Gehäuses durchsetzen, fest verbunden sind, und mit einer jeder der beiden Gruppen von Leitblechen zugeordneten Stelleiste.

Bei einer aus der DE-B-2 749 046 bekannten Verteilereinrichtung dieser Art können die Leitbleche nur eine Schwenkbewegung um ihre Achsen ausführen, so daß die Führungsbolzen nur konzentrisch um die Achsen gekrümmte Langlöcher von Deck- oder Gehäuseplatten durchsetzen können und die diesen zugeordnete Stelleiste nicht nur eine Drehung der Führungsbolzen, sondern auch deren translatorische Bewegung zulassen muß, wenn nicht lediglich eine Parallelverschwenkung der parallel zueinander angeordneten Leitbleche erfolgen soll, sondern die Leitbleche auch unterschiedliche Neigungswinkel zueinander einnehmen sollen.

Aufgabe der Erfindung ist es daher, eine einfach aufgebaute und einfach zu handhabende Stellvorrichtung für die Leitbleche einer Verteilereinrichtung der eingangs angegebenen Art zu schaffen, die bei einer Verschwenkung der Leitbleche nach außen diese divergierend fächerartig aufweitet und bei einem Verschwenken nach innen konvergierend aufeinanderzulaufen läßt.

Erfindungsgemäß wird diese Aufgabe dadurch gelöst, daß die Führungsbolzen durch fixierte Lager gelenkig mit den Leitblechen verbunden und die Leitbleche an ihren dem Häcksler zugewandten Enden in Langlöchern auf den Achsen gelagert sind, daß die Führungsschlitze jeder Gruppe in Querrichtung versetzt und im wesentlichen parallel zueinander und zu der durch die Achsen gezogenen Linie verlaufen und daß die Stelleisten jeder Gruppe derart nach außen geneigt zu dieser Linie angeordnet sind, daß der Abstand der Führungsbolzen zu den Achsen entsprechend dem Versatz der Führungsschlitze nach außen hin von Leitblech zu Leitblech geringer wird.

Die Stelleinrichtung der erfindungsgemäßen Verteilereinrichtung ist konstruktiv einfach aufgebaut und ermöglicht es, den Winkel zwischen benachbarten Leitblechen bei einem Verschwenken von außen nach innen zu verkleinern bzw. negativ werden zu lassen, wenn die Leitbleche auf ihrem Schwenkweg nach innen von ihrer spitzwinkelig auseinanderlaufenden Stellung über ihre parallele Lage in eine spitzwinkelig aufeinander zu verlaufende Stellung verschwenkt werden. Selbstverständlich ist es auch möglich, ausgehend von einer ausgeschwenkten parallelen Stellung der Leitbleche diese bei einem Verschwenken nach innen zunehmend konvergierend aufeinanderzulaufen zu lassen.

Mit der erfindungsgemäßen Stelleinrichtung läßt sich die Verteilereinrichtung in besonders günstiger Weise von einem Breitstreuen des gehäckselten Strohs auf dessen Ablage in einem Schwad umstellen und umgekehrt.

Mit der erfindungsgemäßen Verteilereinrichtung erfolgt eine Verstellung der Leitbleche durch eine Stelleiste, auf der die Führungsbolzen der Leitbleche schwenkbar gelagert sind, wobei unterschiedliche Schwenkwinkel der Leitbleche bei dem gleichen Verschiebeweg der Stelleiste dadurch erreicht werden, daß sich die Schwenkradien der Leitbleche nach außen hin verringern. Da die Führungsbolzen der Leitbleche in geradlinigen, zueinander parallelen Führungsschlitzen des Decksblechs verschoben werden, ermöglichen die Langlöcher die erforderliche Längsverschiebung der Leitbleche bei ihrem Verschwenken.

Selbstverständlich können die Achsen auch fest mit den Leitblechen verbunden sein und Langlöcher des Deckblechs oder Gehäuses durchsetzen.

Die beiden Gruppen der Leitbleche lassen sich unabhängig und daher auch unsymmetrisch zueinander verstellen, so daß durch eine entsprechende Einstellung besonderen Seitenwindverhältnissen oder Hanglagen Rechnung getragen werden kann.

Zweckmäßigerweise sind die Lager der Führungsbolzen auf den Stelleisten in Langlöchern verschieblich geführt und in diesen fixierbar. Auf diese Weise können sich gewünschte Winkelstellungen der Leitbleche einstellen lassen.

Zweckmäßigerweise sind die Langlöcher auf den Stelleisten in Querrichtung versetzt zueinander angeordnet und verlaufen im wesentlichen parallel zu der durch die Achsen, um die die Leitbleche schwenkbar sind, gezogenen Linie.

Eine besonders einfache Handhabung wird dadurch erreicht, daß mit jeder Stelleiste ein mit einem Handgriff versehener Stellhebel gelenkig verbunden ist, der im Abstand von seinem Anlenkpunkt auf der Stelleiste an dem Deckblech angelenkt ist.

Zur Fixierung der Stelleiste in der gewünschten Stellung der Leitbleche kann ein Führungsbolzen durch eine vorzugsweise mit einem Handhebel versehene Mutter in dem Langloch der Deckplatte festziehbar sein.

In weiterer Ausgestaltung der Erfindung ist vorgesehen, daß jedes der beiden seitlichen Begrenzungsbleche der haubenartigen Deckplatte auslaufseitig mit einer Leitklappe gelenkig verbunden ist, die durch eine zweiteilige Koppelstange gelenkig mit der Stelleiste oder dem Stellhebel verbunden ist, wobei die beiden Teile der Koppelstange derart begrenzt teleskopartig zueinander verschieblich und durch eine Feder in ihrer ausgefahrenen Stellung beaufschlagt sind, daß die Leitklappe bei einer Verstellung des Stellhebels nach außen hin in ihre nach außen geschwenkte Stellung gedrückt und bei einer Verstellung nach innen auf dem letzten Teil des Schwenkweges des Stellhebels bis nach vollständiger Streckung der Koppelstange nach innen hin mitgenommen wird. Auf diese Weise passen sich die seitlichen Leitklappen der jeweiligen Stellung der Leitbleche an.

Zur gleichzeitigen gegensinnigen Verstellung beider Stellhebel können diese mit einem zentralen Stellhebel über aus gelenkig miteinander verbundenen Stangen bestehenden Getrieben verbunden sein. Es können auch Stelltriebe in Form von Motoren oder Druckmittelkolbenzylindereinheiten zur gleichzeitigen gleich- oder gegensinnigen oder unsymmetrischen Verstellung der Stellhebel vorgesehen sein.

Ein Ausführungsbeispiel der Erfindung wird nachstehend anhand der Zeichnung näher erläutert. In dieser zeigt:

Fig. 1 den hinteren Teil eines Mähdreschers mit einem Anbauhäcksler, der mit einer Verteilereinrichtung für das gehäckselte Stroh versehen ist, in schematischer Darstellung,

Fig. 2 eine Draufsicht auf die Verteilereinrichtung mit etwa in ihre Mittelstellung geschwenkten Leitblechen,

Fig. 2a die Verteilereinrichtung nach Fig. 2 in Breitstreustellung,

Fig. 2b die Verteilereinrichtung nach Fig. 2 in ihrer Sammelstellung mit nach innen hin verschwenkten Leitblechen,

Fig. 3 eine der Fig. 2 entsprechende Draufsicht auf die Verteilereinrichtung mit einer Stellung der Leitbleche, wie sie für Mähen in Hanglagen zweckmäßig ist,

Fig. 4 einen Teilschnitt durch die Verteilereinrichtung im Bereich einer Stelleiste,

Fig. 5 eine Draufsicht auf den geschnittenen Bereich nach Fig. 4,

Fig. 6 einen Schnitt durch die Verteilereinrichtung längs der Linie VI-VI in Fig. 4,

Fig. 7 eine Seitenansicht eines Teils der der Verstellung der Leitklappe dienenden Koppelstange,

Fig. 8 eine Draufsicht auf die Verteilereinrichtung mit einem Stelltrieb für die Stellhebel,

Fig. 9 eine schematische Darstellung einer von Hand betätigbaren Stelleinrichtung,

Fig. 10 bis 12 schematische Darstellungen von über Antriebe betätigbaren Stelleinrichtungen und

Fig. 13 eine schematische Darstellung einer von Hand betätigbaren Stelleinrichtung.

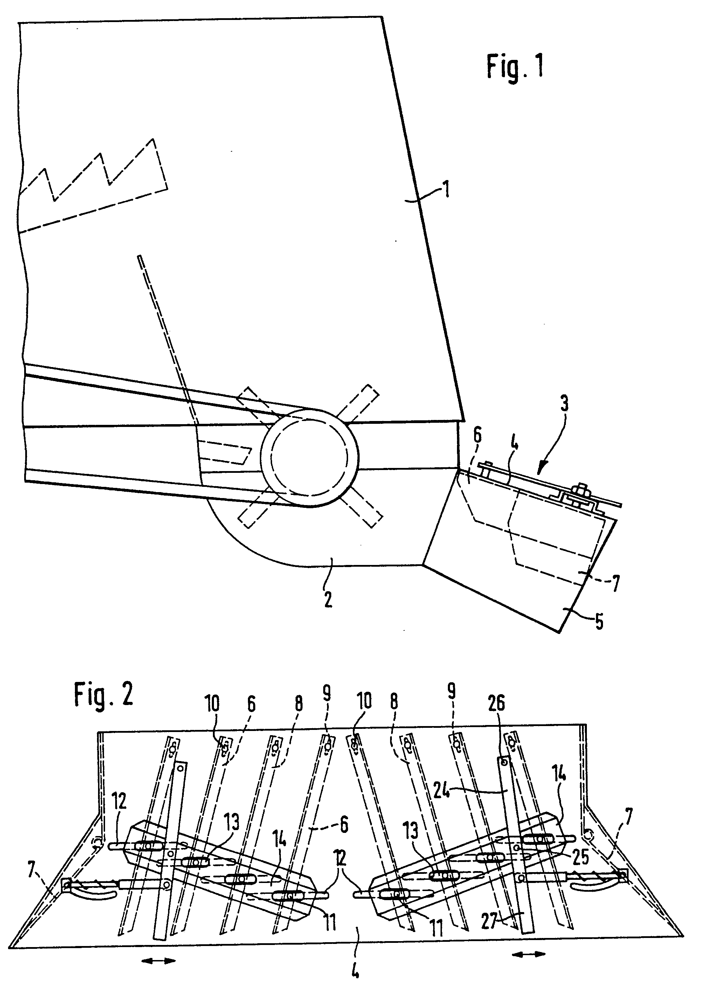

Fig. 1 zeigt einen in üblicher Weise an einen Mähdrescher 1 angebauten Anbauhäcksler 2, der auslaufseitig mit einer Verteilereinrichtung 3 für das gehäckselte Stroh versehen ist. Die Verteilereinrichtung 3 besteht aus einer Deckplatte 4, die haubenartig mit seitlichen abgewinkelten Schenkeln 5 versehen ist. Unter der Deckplatte 4 sind schwenkbare Leitbleche 6 und schwenkbare seitliche Leitklappen 7 vorgesehen.

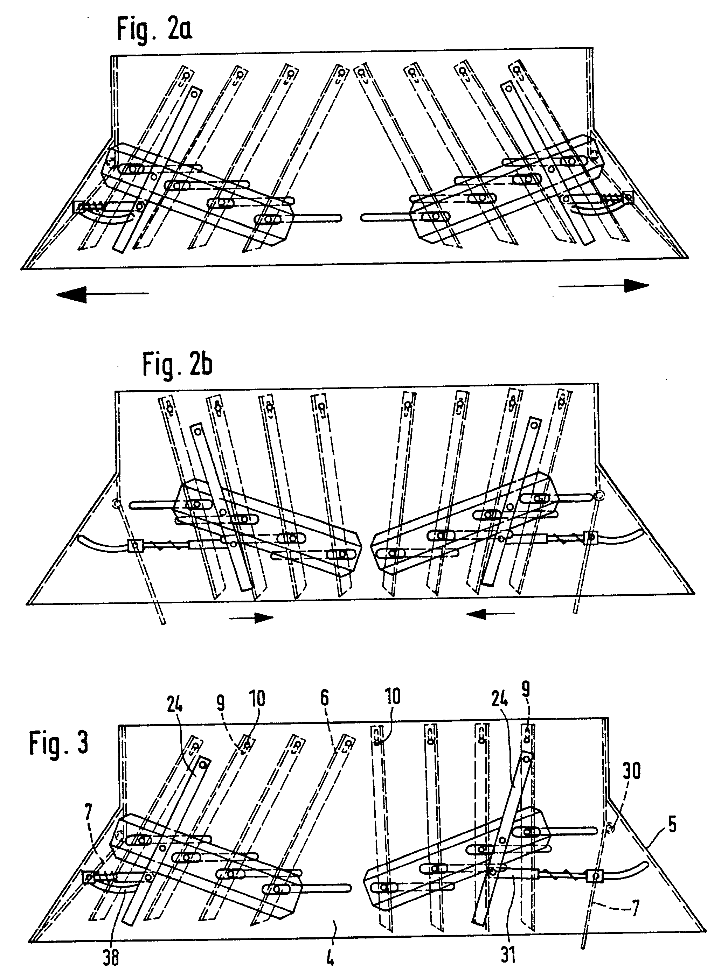

Die Leitbleche 6 sind winkelig, vorzugsweise rechtwinkelig zum Deckblech 4 angeordnet und können zusätzlich auch unterschiedliche Krümmungen um Querachsen aufweisen. Zu ihrer Halterung sind die Leitbleche 6 mit abgewinkelten Schenkeln 8 versehen. An ihren dem Häcksler 2 zugewandten Enden weisen die Schenkel 8 der Leitbleche 6 Langlöcher 9 auf, mit denen sie auf Achsen 10, die an dem Deckblech 4 befestigt sind, schwenkbar gelagert sind. Die Schenkel 8 weisen im Abstand von den Langlöchern 9 auf ihren Rückseiten Führungsbolzen 11 auf, die Führungsschlitze 12 des Deckblechs 4 durchsetzen. Die Führungsschlitze 12 sind in der aus den Fig. 2 und 3 ersichtlichen Weise gestaffelt und parallel zueinander in der Weise angeordnet, daß sie etwa parallel zu der durch die Achsen 10 verlaufenden Linie verlaufen und in Querrichtung etwa gleiche Abstände zueinander aufweisen. Durch diese gestaffelte Anordnung der Führungsschlitze 12 wird erreicht, daß deren radialer Abstand zu den zugehörigen Achsen 10 von innen nach außen hin geringer wird.

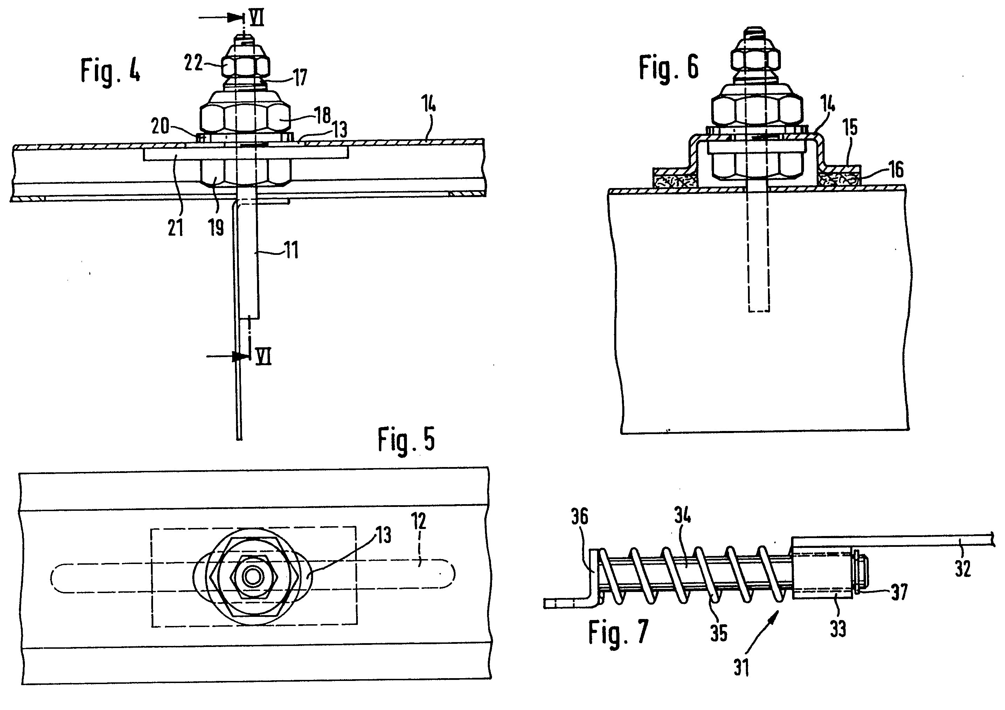

Die freien Enden der Führungsbolzen 11 durchsetzen zusätzlich Langlöcher 13 von Stelleisten 14. Die Stelleisten 14 weisen, wie am besten aus Fig. 6 ersichtlich ist, im wesentlichen einen U-förmigen Querschnitt auf, wobei die Schenkel zusätzlich nach außen abgewinkelt sind, um flanschförmige Auflageflächen 15 zu bilden. Um eine Riefenbildung auf dem Deckblech 4 zu verhindern, sind die Auflageflächen 15 mit Streifen 16 aus Filz oder dergleichen versehen. Die Führungsbolzen 11 sind, wie am besten aus Fig. 4 ersichtlich, in Buchsen 17 schwenkbar gelagert, die über Muttern 18, 19 und Unterlegscheiben 20 und Unterlegstücke 21 in den Langlöchern 13 der Stelleisten 14 verschraubt sind. Die Führungsbolzen 11 überragen mit ihren äußeren mit Gewinden versehenen Teilen die Buchse 17 und sind in dieser durch aufgeschraubte Muttern 22 gehalten. Über die Muttern 22 lassen sich die Führungsbolzen auch festziehen. Zweckmäßigerweise ist daher eine Mutter 22 mit einem Handhebel versehen, um nach jeder Verstellung die eingestellte Stellung fixieren zu können. In den Fig. 4 und 5 sind die Langlöcher 13 parallel zu den Stelleisten 14 verlaufend dargestellt, obwohl sie tatsächlich in der aus den Fig. 2 und 3 ersichtlichen Weise winkelig zu den Stelleisten angeordnet sind.

Mit jeder Stelleiste 14 ist ein zweiarmiger Stellhebel 24 in seinem mittleren Bereich durch die Schwenkachse 25 schwenkbar verbunden. Der häckslerseitige Arm des Schwenkhebels 24 ist um die Achse 26 schwenkbar mit dem Deckblech 4 verbunden. Der nach außen weisende Arm 27 des Stellhebels 24 ist zweckmäßigerweise mit einem Handgriff versehen und dient der Handverstellung der Leitbleche.

Wie aus Fig. 3 ersichtlich ist, liegen die Achsen 10 bei einem Verschwenken der Leitbleche 6 nach innen im inneren Endbereich der Langlöcher 9 und bei einem Verschwenken nach außen in deren äußerem Randbereich.

In dem Auslaufbereich der seitlichen Schenkel 5 des haubenartigen Abdeckblechs 4 sind um vertikale Achsen 30 Leitklappen 7 schwenkbar gelagert. Diese sind über Koppelstangen 31 gelenkig mit dem Stellhebel 24 verbunden. Die Koppelstange ist in der aus Fig. 7 ersichtlichen Weise zweiteilig aufgebaut und weist einen ersten gelenkig mit dem Stellhebel 24 verbundenen Teil 32 auf, der eine Buchse 33 trägt, in der der zweite stangenförmige Teil 34 der Koppelstange axialverschieblich geführt ist. Auf die Stange 34 ist eine Druckfeder 35 aufgeschoben, die sich einerseits auf der Buchse 33 und andererseits auf dem Lagerstück 36 abstützt. Gegen ein Herausfallen aus der Buchse ist die Stange 34 durch einen Sicherungsring 37 gesichert.

Da das stangenförmige Teil 34 in der Buchse 33 des ersten Teils 32 teleskopartig geführt ist und die Druckfeder 35 bestrebt ist, die Koppelstange 31 in ihrem gestreckten Zustand zu halten, nimmt der Stellhebel 24 die Leitklappe 7 auf dem letzten Teil seines Schwenkweges nach innen hin mit, während der nach außen geschwenkte Stellhebel 24 die Leitklappe 7 in ihrer nach außen geschwenkten Stellung hält, wie es aus Fig. 3 ersichtlich ist.

Der mit dem Gelenk versehene Stellbolzen der Leitklappe 7 ist in einem kreisförmig gekrümmten Langloch 38 der Deckplatte 4 geführt.

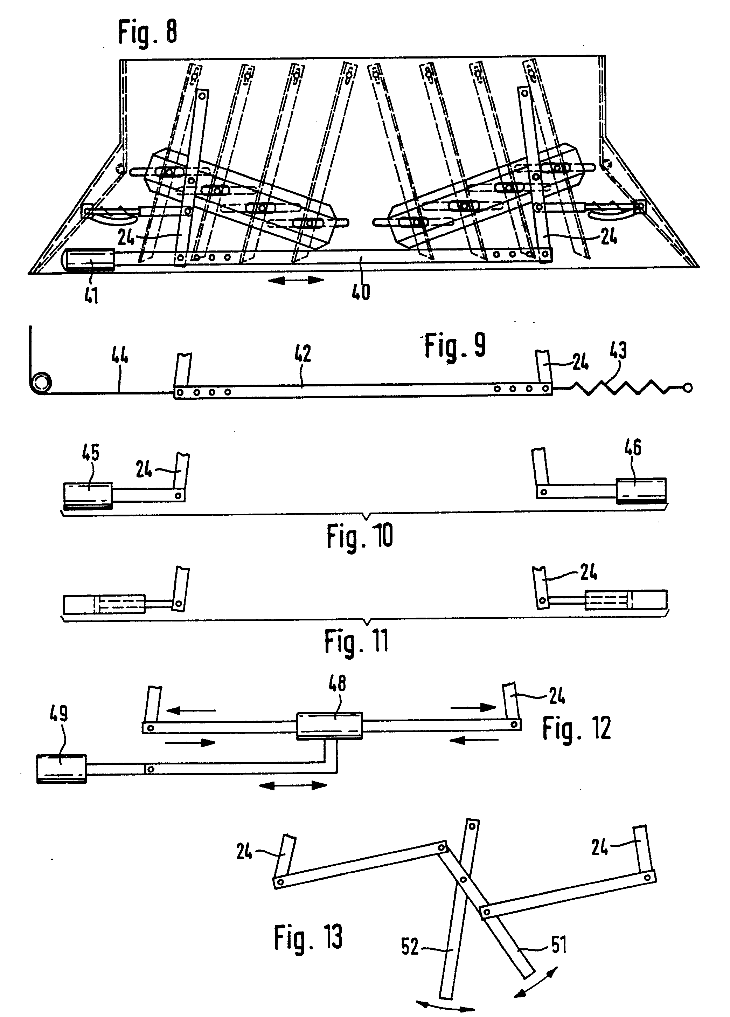

Die Stellhebel 24 können in der aus Fig. 8 ersichtlichen Weise durch eine Koppelstange 40 miteinander verbunden sein, die durch einen geeigneten Antrieb 41 hin und her beweglich ist.

Um eine gemeinsame Handverstellung der Leitbleche zu ermöglichen, können die Stellhebel 24 mit einer Koppelstange 42 verbunden sein, deren eines Ende von einer Zugfeder 43 beaufschlagt ist und deren anderes Ende mit einem von Hand betätigbaren Zugseil 44 verbunden ist.

Die beiden Stellhebel 24 können auch in der aus Fig. 10 ersichtlichen Weise getrennt durch Antriebe 45, 46 verstellbar sein. Die Antriebe können in der aus Fig. 11 ersichtlichen Weise aus Druckmittel-Kolben-Zylinder-Einheiten bestehen.

Aus Fig. 12 ist eine Anordnung ersichtlich, bei der die Stellhebel 24 durch einen ersten Antrieb 48 in ihrem gegenseitigen Abstand verstellbar und durch einen zweiten Antrieb 49 gemeinsam gegensinnig verstellbar sind.

In Fig. 13 ist eine Verstelleinrichtung über Handhebel 51, 52 gezeigt, bei der über den Hebel 51 der Relativabstand der Stellhebel 24 zueinander eingestellt werden kann und bei dem über den Hebel 52 eine gemeinsame gegensinnige Verstellung der Stellhebel 24 möglich ist.

## Patentansprüche

1. Verteilereinrichtung für Häcksler, vorzugsweise Anbauhäcksler für Mähdrescher, mit einem oberen Deckblech (4), unterhalb von dem eine rechte und eine linke Gruppe von winkelig, vorzugsweise rechtwinkelig, zu diesem stehenden Leitblechen (6) nebeneinander angeordnet sind, die an ihrem dem Häcksler zugewandten Ende um Achsen (10) schwenkbar gelagert und im Abstand von diesen Achsen mit Führungsbolzen (11), die Führungsschlitze (12) des Deckblechs (4) oder des Gehäuses durchsetzen, fest verbunden sind, und mit einer jeder der beiden Gruppen von Leitblechen (6) zugeordneten Stelleiste (14), dadurch gekennzeichnet,

daß die Führungsbolzen (11) gelenkig mit den Leitblechen (6) durch fixierte Lager (17, 18, 19) verbunden und die Leitbleche (6) an ihren dem Häcksler (2) zugewandten Enden in Langlöchern (9) auf den Achsen (10) gelagert sind,

daß die Führungsschlitze (12) jeder Gruppe in Querrichtung versetzt und im wesentlichen parallel zueinander und zu der durch die Achsen (10) gezogenen Linie verlaufen und

daß die Stelleisten (14) jeder Gruppe derart nach außen geneigt zu dieser Linie angeordnet sind, daß der Abstand der Führungsbolzen (11) zu den Achsen (10) entsprechend dem Versatz der Führungsschlitze (12) nach außen hin von Leitblech zu Leitblech (6) geringer wird.

2. Verteilereinrichtung nach Anspruch 1, dadurch gekennzeichnet, daß die Lager (17) der Führungsbolzen (11) auf den Stelleisten (14) in Langlöchern (13) verschieblich und fixierbar sind.

3. Verteilereinrichtung nach Anspruch 1 oder 2, dadurch gekennzeichnet, daß die Langlöcher (13) auf den Stelleisten (14) in Querrichtung versetzt zueinander angeordnet sind und im wesentlichen parallel zu der durch die Achsen (10), um die die Leitbleche (6) schwenkbar sind, gezogenen Linie verlaufen.

4. Verteilereinrichtung nach einem der Ansprüche 1 bis 3, dadurch gekennzeichnet, daß mit jeder Stelleiste (14) ein Stellhebel (24) gelenkig verbunden ist, der im Abstand von seinem Anlenkpunkt (25) auf der Stelleiste (14) an dem Deckblech (4) angelenkt ist.

5. Verteilereinrichtung nach einem der Ansprüche 1 bis 4, dadurch gekennzeichnet, daß zur Fixierung der Stelleiste (14) in der gewünschten Stellung der Leitbleche (6) ein Führungsbolzen (11) durch eine vorzugsweise mit einem Handhebel versehene Mutter in dem Führungsschlitz (12) der Deckplatte (4) festziehbar ist.

6. Verteilereinrichtung nach einem der Ansprüche 1 bis 5, dadurch gekennzeichnet, daß jedes der beiden seitlichen Begrenzungsbleche (5) der haubenartigen Deckplatte (4) auslaufseitig mit einer Leitklappe (7) gelenkig verbunden ist, die durch eine zweiteilige Koppelstange (31) gelenkig mit der Stelleiste (14) für den Stellhebel (24) verbunden ist, und daß die beiden Teile der Koppelstange (31) derart begrenzt teleskopartig zueinander verschieblich und durch eine Feder (35) in ihre ausgefahrene Stellung beaufschlagt sind, daß die Leitklappe (7) bei einer Verstellung des Stellhebels (24) nach außen in ihre nach außen geschwenkte Stellung gedrückt und bei der Verstellung nach innen in dem letzten Teil des Schwenkweges des Stellhebels (24) nach vollständiger Streckung der Koppelstange (31) nach innen hin mitgenommen wird.

7. Verteilereinrichtung nach einem der Ansprüche 1 bis 6, dadurch gekennzeichnet, daß zur gleichzeitigen gegensinnigen Verstellung beider Stellhebel (24) diese mit mindestens einem zentralen Stellhebel (51, 52) über aus gelenkig miteinander verbundenen Stangen bestehende Getriebe verbunden sind.

8. Verteilereinrichtung nach einem der Ansprüche 1 bis 6, dadurch gekennzeichnet, daß Stelltriebe (41, 45, 48, 49) — Motore oder Druckmittelkolbenzylindereinheiten — zur gleichzeitigen, gleich- oder gegensinnigen oder unsymmetrischen Verstellung der Stellhebel (24) vorgesehen sind.

## Claims

1. A distributor device for straw cutters, in particular attachment straw cutters for combine harvesters, comprising an upper cover plate (4) beneath which are arranged in juxtaposed relationship a righthand and a left-hand group of guide plates (6) which are disposed at an angle and preferably a right angle to the upper cover plate and which are mounted pivotably about axes (10) at their ends towards the straw cutter and which are fixedly connected at a spacing from said axes to guide pins (11) which pass through guide slots (12) in the cover plate (4) or the housing, and further comprising a control bar (14) associated with each of the two groups of guide plates (6), characterised in that

the guide pins (11) are pivotally connected to the guide plates (6) by fixed mountings (17, 18, 19) and the guide plates (6) are mounted in slots (9) on the axes (10) at their ends towards the straw cutter (2),

the guide slots (12) of each group are displaced in the transverse direction and extend substantially parallel to each other and to the line which passes through the axes (10), and

the control bars (14) of each group are arranged inclinedly outwardly with respect to said line in such a way that spacing of the guide pins (11) from the axes (10) decreases outwardly from one guide plate (6) to another, in accordance with the displacement of the guide slots (12).

2. A distributor device according to claim 1 characterised in that the mountings (17) of the guide pins (11) on the control bars (14) are displaceable and can be fixed in slots (13).

3. A distributor device according to claim 1 or claim 2 characterised in that the slots (13) on the control bars (14) are arranged in mutually displaced relationship in the transverse direction and extend substantially parallel to the line which passes through the axes (10) about which the guide plates (6) are pivotable.

4. A distributor device according to one of claims 1 to 3 characterised in that a control lever (24) is pivotably connected to each control bar (14), the control lever (24) being pivotally connected to the cover plate (4) at a spacing from its point (25) of connection on the control bar (14).

5. A distributor device according to one of claims 1 to 4 characterised in that, for the purposes of fixing the control bar (14) in the desired position of the guide plates (6), a guide pin (11) can be fastened in the guide slot (12) in the cover plate (4) by a nut which is preferably provided with a hand lever.

6. A distributor device according to one of claims 1 to 5 characterised in that each of the two lateral boundary plates (5) of the hood-like cover plate (4) is pivotally connected on the exit side to a guide flap (7) which is pivotally connected by a two-part coupling rod (31) to the control bar (14) for the control lever (24), and that the two parts of the coupling rod (31) are limitedly telescopically displaceable relative to each other and are urged by a spring (35) into their extended position, in such a way that the guide flap (7) is urged into its outwardly pivoted position upon displacement of the control lever (24) outwardly and is entrained inwardly upon displacement inwardly, in the last part of the pivotal movement of the control lever (24), after total extension of the coupling rod (31).

7. A distributor device according to one of claims 1 to 6 characterised in that for simultaneous displacement of the two control levers (24) in opposite directions the control levers (24) are connected to at least one central control lever (51, 52) by way of transmission means comprising pivotally interconnected rods.

8. A distributor device according to one of claims 1 to 6 characterised in that control devices (41, 45, 48, 49) — motors or pressure fluid piston cylinder units — are provided for simultaneous displacement of the control levers (24) in the same or opposite directions or in an asymmetrical mode.

**Revendications**

1. Répartiteur pour hachoir, de préférence pour hachoirs agricoles de moissonneuses-batteuses, comportant une tôle de couvercle (4) supérieure, au-dessous de laquelle se trouvent disposés un groupe droit et un groupe gauche de tôles de guidage (6) juxtaposées, formant un angle, de préférence un angle droit par rapport à la tôle de couvercle, lesdites tôles de guidage étant logées de manière à pouvoir pivoter en leurs extrémités orientées vers le hachoir autour d'axes (10) et sont fermement liées à distance de ces axes au moyen de boulons de guidage (11) qui traversent les fentes de guidage (12) de la tôle de couvercle (4) ou du bâti, et une barre de réglage (14) associée à chacun des deux groupes de tôles de guidage (6), caractérisé en ce que:

les boulons de guidage (11) sont liés par une articulation aux tôles de guidage (6) par des paliers fixés (17, 18, 19) et que les tôles de guidage (6) sont logées sur les axes (10) dans des trous oblongs (9) par leurs extrémités orientées vers la hachoir (2), que les fentes de guidage (12) de chaque groupe sont décalées transversalement et s'étendent substantiellement en parallèle l'une par rapport à l'autre et par rapport à la ligne tirée entre les axes (10) et que les barres de réglage (14) de chaque groupe sont inclinées vers l'extérieur et disposées par rapport à cette ligne de sorte que la distance des boulons de guidage (11) par rapport aux axes (10) diminue vers l'extérieur d'une tôle de guidage à l'autre (6) en correspondance avec le décalage des fentes de guidage (12).

2. Répartiteur selon la revendication 1, caractérisé en ce que les paliers (17) des boulons de guidage (11) sur les barres de réglage (14) peuvent être fixés dans des trous oblongs (13) de manière à pouvoir se déplacer.

3. Répartiteur selon les revendications 1 ou 2, caractérisé en ce que les trous oblongs (13) sont disposés sur les barres de réglage (14) en direction transversale et décalés l'un par rapport à l'autre et substantiellement en parallèle par rapport à la ligne tirée à travers les axes (10) autour desquels les tôles de guidage (6) peuvent être pivotées.

4. Répartiteur selon l'une des revendications 1 à 3, caractérisé en ce que chaque barre de réglage (14) est raccordée par une articulation à un levier de réglage (24) qui est raccordé par une articulation à la tôle de couvercle (4), à distance du point d'articulation (25) sur la barre de réglage (14).

5. Répartiteur selon l'une des revendications 1 à 4, caractérisé en ce qu'un boulon de guidage (11) peut être serré par l'intermédiaire d'un écrou pourvu de préférence d'un levier dans la fente de guidage (12) de la tôle de couvercle (4) pour fixer la barre de réglage (14) dans la position souhaitée des tôles de guidage (6).

6. Répartiteur selon l'une des revendications 1 à 5, caractérisé en ce que chacune des deux tôles de délimitation (5) latérale de la tôle de couvercle (4) en forme de calotte est raccordée par une articulation à un clapet de guidage (7) côté sortie, qui est raccordé de manière articulée par l'intermédiaire d'une bielle (31) en deux parties avec la barre de réglage (14) pour le levier de réglage (24) et que les deux parties de la bielle (31) peuvent être déplacées reciproquement sur une distance limitée à la manière d'un télescope et sont exposées à la force d'un ressort (35) dans leur position étirée, que le clapet de guidage (7) est pressé dans sa position pivotée vers l'extérieur lorsque le levier de réglage (24) est déplacé vers l'extérieur et lorsque celui-ci est déplacé vers l'intérieur dans la dernière partie de la course de pivotement du levier de réglage (24), le clapet de guidage est entraîné vers l'intérieur après que la bielle (31) a été entièrement étirée.

7. Répartiteur selon l'une des revendications 1 à 6, caractérisé en ce que pour le déplacement simultané en sens inverse des deux leviers de réglage (24), ceux-ci sont raccordés à au moins un levier de réglage central (51, 52) par l'intermédiaire d'engrenages consistant en barres reliées entre elles par des articulations.

8. Répartiteur selon l'une des revendications 1 à 6, caractérisé en ce que des servos (41, 45, 48, 49), moteurs ou unités piston/cylindre, sont prévus pour le déplacement des leviers de réglage (24) simultanément, dans le même sens ou en sens inverse ou asymétriquement.

Fig. 1

1

3

6

4

7

2

5

Fig. 2

10  6  8  9  10  8  9  26

12

13

14

6

24

14

7

13

12

25

11

11

27

7

4

7

Fig. 2a

Fig. 2b

Fig. 3

Fig. 4

Fig. 6

Fig. 5

Fig. 7

EP 0 212 270 B1

Fig. 8

24

41

40

24

Fig. 9

44

42

24

43

45

24

46

Fig. 10

24

Fig. 11

49

48

24

Fig. 12

24

24

Fig. 13

52

51